# EUROPEAN PATENT APPLICATION

(11) **EP 2 918 781 A1**
(43) Date of publication of application: **16.09.2015**
(21) Application number: 14194484.3
(22) Date of filing: 24.11.2014
(51) Int. Cl.: F01D 5/18

(54) **Turbine blade with near wall microcircuit edge cooling**

(30) Priority: 02.12.2013 US 201314093561
(71) Applicant: Siemens Energy, Inc., Orlando, FL 32826-2399 (US)
(72) Inventor: Liang, George, Palm City, FL 34990 (US)
(74) Representative: Maier, Daniel Oliver

(57) **Abstract**

Micro-circuit cooling channels (174, 176, 186) that provide thin wall leading edge (80) and trailing edge (82) cooling for a turbine blade. The blade includes an outer housing wall (194) defining an enclosure and a plurality of ribs extending at least a portion of the length of the blade within the enclosure and defining a serpentine flow channel that allows a cooling airflow to flow from a proximal end to a distal end of the enclosure. The micro-circuit cooling channels (174, 176, 186) are positioned at the leading edge (80) of the airfoil and the trailing edge (84) of the airfoil and include a plurality of micro-pins (190, 198, 200) extending across the micro-circuit cooling channels.

## Description

### BACKGROUND OF THE INVENTION

### Field of the Invention

This invention relates generally to a micro-circuit cooling channel for providing cooling in a leading edge and trailing edge of a turbine blade and, more particularly, to a micro-circuit cooling channel including a flow channel having cross-pins that provides double wall cooling for both a leading edge and trailing edge of a turbine blade.

### Discussion of the Related Art

The world's energy needs continue to rise which provides a demand for reliable, affordable, efficient and environmentally-compatible power generation. A gas turbine engine is one known machine that provides efficient power, and often has application for an electric generator in a power plant, or engines in an aircraft or a ship. A typically gas turbine engine includes a compressor section, a combustion section and a turbine section. The compressor section provides a compressed air flow to the combustion section where the air is mixed with a fuel, such as natural gas, and ignited to create a hot working gas. The working gas expands through the turbine section and is directed across rows of blades therein by associated vanes. As the working gas passes through the turbine section, it causes the blades to rotate, which in turn causes a shaft to rotate, thereby providing mechanical work.

The temperature of the working gas is tightly controlled so that it does not exceed some predetermined temperature for a particular turbine engine design because to high of a temperature can damage various parts and components in the turbine section of the engine. However, it is desirable to allow the temperature of the working gas to be as high as possible because the higher the temperature of the working gas, the faster the flow of the gas, which results in a more efficient operation of the engine.

In certain gas engine turbine designs, a portion of the compressed air flow is also used to provide cooling for certain components in the turbine section, typically the vanes, blades and ring segments. The more cooling and/or the more efficient cooling that can be provided to these components allows the components to be maintained at a lower temperature, and thus the higher the temperature of the working gas can be. For example, by reducing the temperature of the compressed gas, less compressed gas is required to maintain the part at the desired temperature, resulting in a higher working gas temperature and a greater power and efficiency from the engine. Further, by using less cooling air at one location in the turbine section, more cooling air can be used at another location in the turbine section. In one known turbine engine design, 80% of the compressed air flow is mixed with the fuel to provide the working gas and 20% of the compressed air flow is used to cool the turbine section parts. If less of that cooling air is used at one particular location as a result of the cooling air being lower in temperature, then more cooling air can be used at other areas in the turbine section for increased cooling.

It is known in the art to provide a serpentine cooling airflow channel within the blades in the turbine section, where the air flows up one channel and down an adjacent channel in a back and forth motion before the cooling air exits the blade. It is also known in the art to provide a "shower head" cooling channel at the leading edge of a turbine blade, where air flows into the channel and out of angled orifices to provide leading edge cooling. It is further known to provide partial film cooling at a trailing edge of a turbine blade. However, the external heat transfer coefficient of these cooling designs shows that both the leading edge and the trailing edge of the blade airfoil have a high heat load, thus requiring further super-cooling.

### SUMMARY OF THE INVENTION

This disclosure describes micro-circuit cooling channels that provide thin wall leading edge and trailing edge cooling for a turbine blade. The blade includes an outer housing wall defining an enclosure and a plurality of ribs extending at least a portion of the length of the blade within the enclosure and defining a serpentine flow channel that allows a cooling airflow to flow from a proximal end to a distal end of the enclosure. The micro-circuit cooling channels are positioned at the leading edge of the airfoil and the trailing edge of the airfoil and include a plurality of micro-pins extending across the micro-circuit cooling channel.

Additional features of the present invention will become apparent from the following description and appended claims, taken in conjunction with the accompanying drawings.

### BRIEF DESCRIPTION OF THE DRAWINGS

Figure 1 is a cut-away, isometric view of a gas turbine engine;
Figure 2 is a cross-sectional view of a known turbine blade separated from a gas turbine engine;
Figure 3 is a cross-sectional view along line 3-3 of the blade shown in figure 2;
Figure 4 is a graph showing heat transfer coefficient (HTC) on the vertical axis and pressure side (PS) and suction side (SS) distances of a blade airfoil on the horizontal axis;
Figure 5 is a cross-sectional view of a turbine blade including micro-circuit cooling channels in both a leading edge and a trailing edge of the blade;
Figure 6 is a cross-sectional view along line 6-6 of the blade shown in figure 5;
Figure 7 is a cross-sectional view of the leading edge micro-circuit cooling channel shown in figure 5;
Figure 8 is a cut-away end view of the trailing edge of the airfoil shown in figure 6; and
Figure 9 is a cooling circuit showing the cooling fluid flow path in the blade shown in figures 5 and 6.

### DETAILED DESCRIPTION OF THE EMBODIMENTS

The following discussion of the embodiments of the invention directed to a micro-circuit cooling channel for a leading edge and a trailing edge of a blade in a gas turbine engine is merely exemplary in nature, and is in no way intended to limit the invention or its applications or uses.

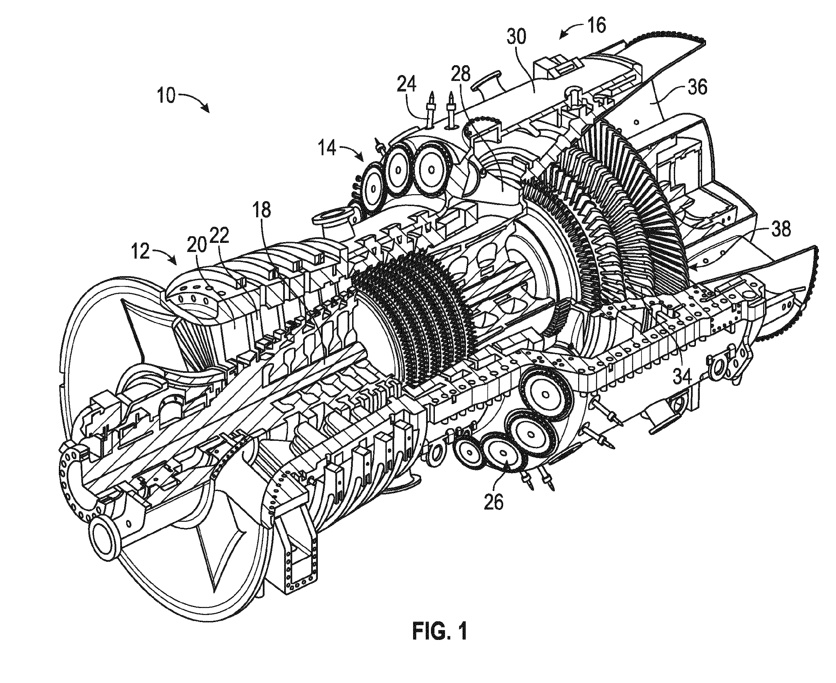

Figure 1 is a cut-away, isometric view of a gas turbine engine 10 including a compressor section 12, a combustion section 14 and a turbine section 16 all enclosed within an outer housing 30, where operation of the engine 10 causes a central shaft or rotor 18 to rotate, thus creating mechanical work. The engine 10 is illustrated and described by way of a non-limiting example to give context to the invention discussed below. Those skilled in the art will appreciate that other gas turbine engine designs will also benefit from the invention. Rotation of the rotor 18 draws air into the compressor section 12 where it is directed by vanes 22 and compressed by rotating blades 20 to be delivered to the combustion section 14 where the compressed air is mixed with a fuel, such as natural gas, and where the fuel/air mixture is ignited to create a hot working gas. More specifically, the combustion section 14 includes a number of circumferentially disposed combustors 26 each receiving the fuel that is injected into the combustor 26 by an injector (not shown) and mixed with the compressed air to be ignited by an igniter 24 to create the working gas, which is directed by a transition 28 into the turbine section 16. The working gas is directed by circumferentially disposed stationary vanes (not shown) in the turbine section 16 to flow across circumferentially disposed rotatable turbine blades 34, which causes the turbine blades 34 to rotate, thus rotating the rotor 18. Once the working gas passes through the turbine section 16 it is output from the engine 10 as an exhaust gas through an output nozzle 36.

Each group of the circumferentially disposed stationary vanes defines a row of the vanes and each group of the circumferentially disposed blades 34 defines a row 38 of the blades 34. In this non-limiting embodiment, the turbine section 16 includes four rows 38 of the rotating blades 34 and four rows of the stationary vanes in an alternating sequence. In other gas turbine engine designs, the turbine section 16 may include more or less rows of the turbine blades 34. It is noted that the most forward row of the turbine blades 34, referred to as the row 1 blades, and the vanes, referred to as the row 1 vanes, receive the highest temperature of the working gas, where the temperature of the working gas decreases as it flows through the turbine section 16.

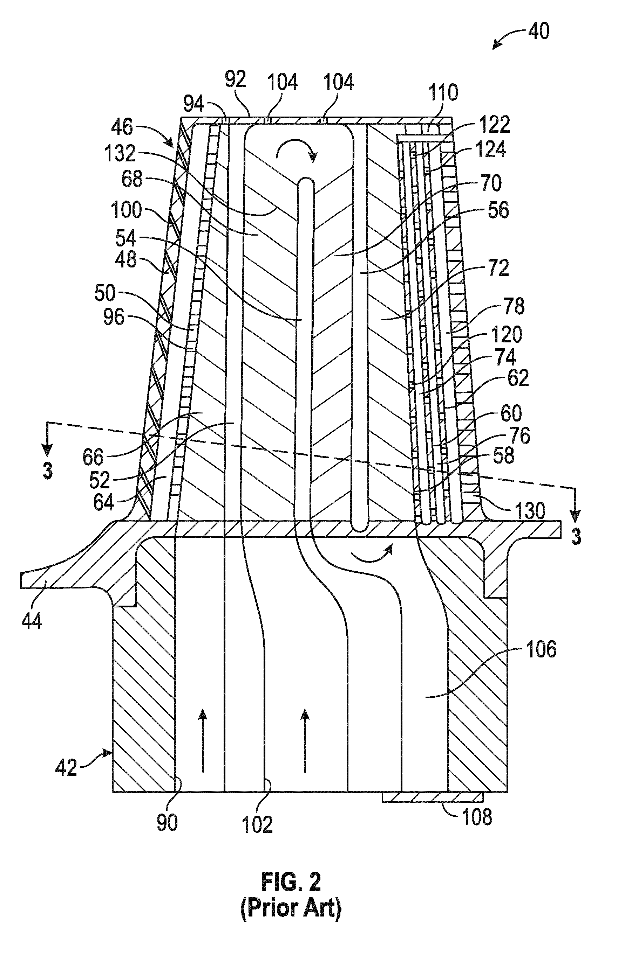

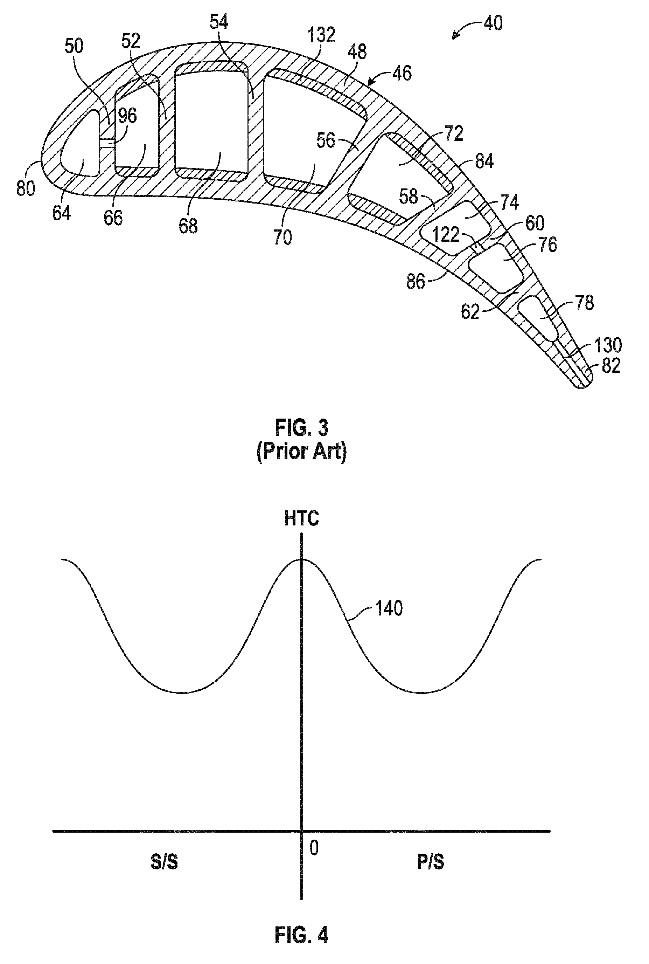

Figure 2 is a cross-sectional view of a known airfoil or blade 40 that is intended to represent a row 1 blade, but can be a general representation of any of the blades 34 in the rows in the gas turbine engine 10, where the blade 40 includes cooling airflow channels discussed in detail below. Figure 3 is a cross-sectional view of the blade 40 along line 3-3 in figure 2. The blade 40 includes an attachment portion 42 that is configured to allow the blade 40 to be securely mounted to the rotor 18 in a manner well understood by those skilled in the art. A blade platform 44 is provided at a distal end of the attachment portion 42 and defines the beginning of a tapered airfoil portion 46 of the blade 40. The airfoil portion 46 includes a pressure side (P/S) 86 and a suction side (S/S) 84 defined by the pressure present on the airfoil portion 46 as it rotates. Further, the airfoil portion 46 also includes a leading edge 80 and a trailing edge 82.

The airfoil portion 46 includes an outer housing 48 and a number of internal ribs 50, 52, 54, 56, 58 60 and 62, typically configured as a single piece insert and being made of ceramic, that define a series of flow channels. The flow channels include a shower head flow channel 64 between the outer housing 48 and the rib 50, a flow channel 66 between the rib 50 and the rib 52, a flow channel 68 between the rib 52 and the rib 54, a flow channel 70 between the rib 54 and the rib 56, a flow channel 72 between the rib 56 and the rib 58, an impingement flow channel 74 between the rib 58 and the rib 60, an impingement flow channel 76 between the rib 60 and the rib 62, and an impingement flow channel 78 between the rib 62 and the outer housing 48. The flow channels 68, 70 and 72 combine to make up a serpentine flow channel. Air flows into the blade 40 through an input opening 90 in the attachment portion 42, enters the channel 66 and flows towards an end portion 92 of the housing 48, where some of the airflow exits the flow channel 66 through orifices 94. Some of that air flows through orifices 96 in the rib 50 into the shower head channel 64 and out of the airfoil portion 46 through a series of orifices 100 that are angled upward towards the end portion 92. Airflow also enters the blade 40 through an opening 102 in the attachment portion 42 and flows into the channel 68 where some of the airflow flows out orifices 104. Most of the airflow flows into the channel 70 to flow back down the airfoil 46 and into a chamber 106 in the attachment portion 42 that has an opening covered by a cover plate 108. The air then flows back up the blade 40 through the channel 72 and through orifices 110 in the housing 48.

The rib 58 includes a series of orifices 120 that allow the air to flow into the channel 60 between the ribs 58 and 60, the rib 60 includes a series of orifices 122 that allow the air to flow into the channel 62 between the ribs 60 and 62, and the rib 62 includes a series of orifices 124 that allow the air to flow into a channel 94 between the rib 58 and the outer housing 48. A series of orifices 130 in the outer housing 48 allows the air to flow out of the blade 40. As is apparent, the orifices 120, 122 and 124 in the ribs 58, 60 and 62 are staggered relative to each other so that the air does not flow directly from one channel across the next channel into the following channel. This causes the air flowing through one of the orifices to strike a section of the rib in the next channel also creating turbulence that increases the cooling effect. Particularly, this airflow effect creates vortexes inside of the channels 74, 76 and 78 that also provide turbulence for effective cooling.

It is known in the art to provide a configuration of turbulators or trip strips mounted to the inner walls of the flow channel portions 66, 68, 70 and 72, represented generally as reference number 132 in figure 2. A trip strip for this purpose is typically a metal strip formed to an inside surface of the outer housing 48 of the blade 40 in a transverse direction to the flow of the cooling air. In this design, the trip strips 132 are shown as skewed trip strips in that they are angled slightly relative to the direction of the flow of the cooling air. In an alternate embodiment, the trip strips 132 can be normal to the flow direction of the air. Skewed trip strips are sometimes employed over normal trip strips so as to allow the trip strip to be longer, which provides more turbulent airflow.

Figure 4 is a graph with heat transfer coefficient (HTC) on the vertical axis and distance along the airfoil 46 on the pressure side 48 and the suction side 62 of the airfoil 46. Graph line 140 shows that at the trailing edge 82 and the leading edge 80, the airfoil has a high HTC requiring additional cooling than the mid-chord region of the airfoil 46.

As mentioned above, super-cooling is generally required at the leading edge and trailing edge of the airfoil 46. This super-cooling was provided in the airfoil 46 by the shower head channel 64 and the impingement channels 74, 76 and 78. This design still provided the high heat transfer coefficient at these areas as shown in figure 4 especially in light of the increased turbine temperatures of modem gas turbine engine designs. It is thus desirable to improve those heat transfer coefficients. The present invention proposes providing improved super-cooling through the use of thin wall micro-circuit cooling as described below.

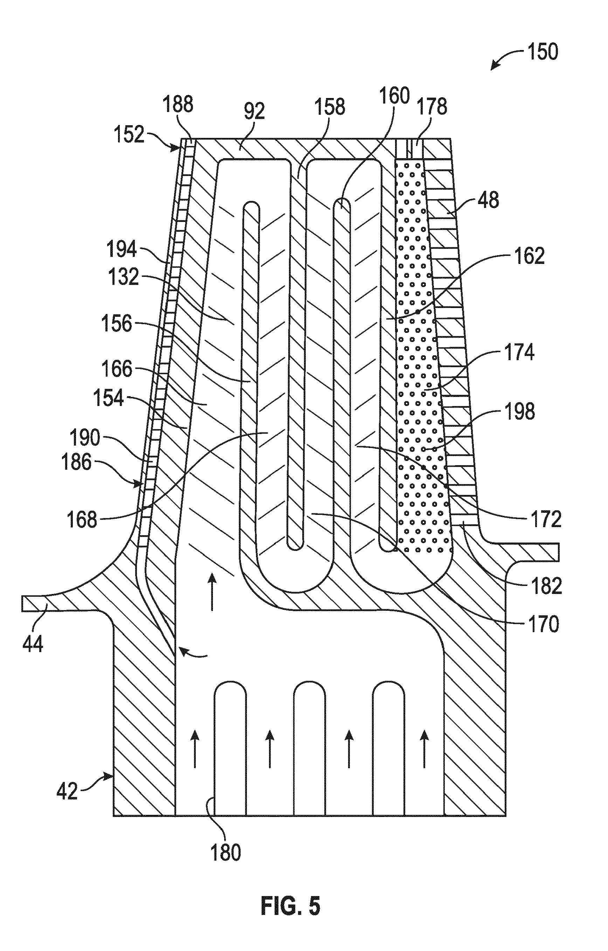

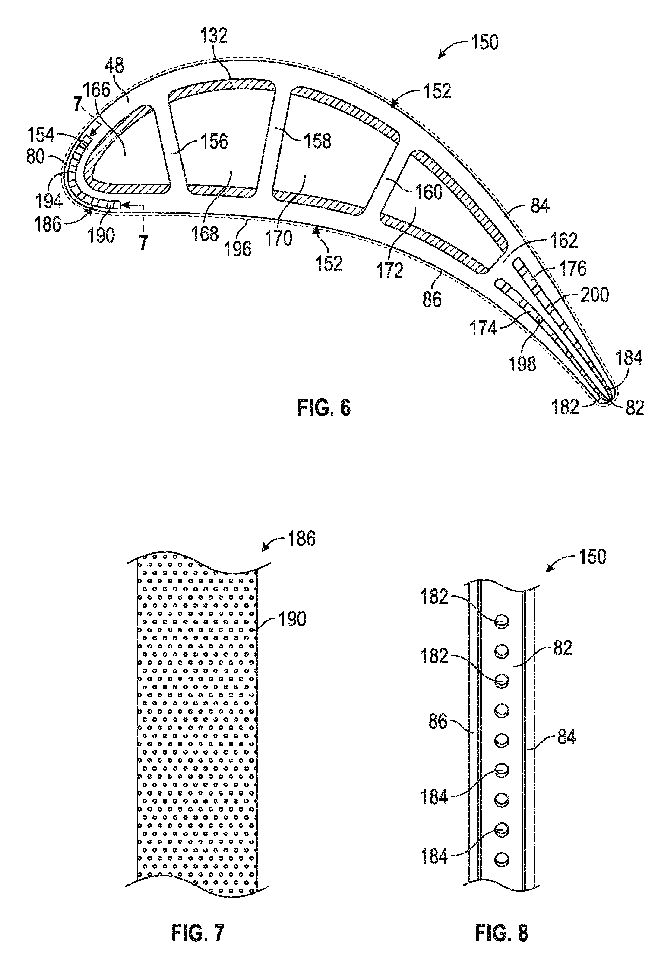

Figure 5 is cross-sectional view and figure 6 is a cross-sectional view along line 6-6 of a blade 150 including an airfoil 152 for the turbine section 16 of, for example, the gas turbine engine 10 having the same shape as the blade 40, where like elements to the blade 40 are identified by the same reference number. As is apparent, in the blade 150, the shower head channel 64 and the impingement channels 74, 76 and 78 have been eliminated. The blade 150 includes internal ribs 154, 156, 158, 160 and 162 that define a series of flow channels. The flow channels include a flow channel 166 between the ribs 154 and 156, a flow channel 168 between the ribs 156 and 158, a flow channel 170 between the ribs 158 and 160, a flow channel 172 between the ribs 160 and 162 and micro-circuit cooling flow channels 174 and 176 at the pressure side 86 and suction side 84, respectively, of the airfoil 150 between the rib 162 and the outer housing 48. The flow channels 166, 168, 170 and 172 combine to make up a serpentine flow channel. Air flows into the blade 150 through several openings 180 in the attachment portion 42, enters the channel 166 to flow towards the end portion 92, flows back down the channel 168, flows back up the airfoil 152 through the channel 170, flows back down the airfoil 46 through the channel 172 and enters the micro-circuit cooling channels 174 and 176. Air flowing through the micro-circuit cooling channels 174 and 176 exits the airfoil 152 through a series of orifices 178 in the end portion 92. Airflow through the channels 174 and 176 also flows out of the trailing edge 82 through orifices 182 and 184, respectively. Additionally, air entering the attachment portion 42 through the channels 180 flows into a micro-circuit cooling channel 186 at the leading edge 80 of the airfoil 46 and exits the micro-circuit cooling flow channel 186 through a series of orifices 188 in the end portion 92.

Figure 7 is a cut-away cross-sectional view along line 7-7 in figure 6. The micro-circuit cooling channel 186 includes a series of cross-pins 190 arranged in a staggered array, as shown, so that a cross-pin 190 in one row is positioned between to cross-pins 190 in an adjacent row. As the air flows through the channel 186 it encounters the cross-pins 190 to create a turbulent airflow to provide a higher effective cooling. The micro-circuit cooling flow channel 186 is positioned very close to the outer surface of the leading edge of the airfoil 152 to form a thin wall 194, where the thin wall 194 has a dimension of 0.005-0.008" in one embodiment. The size of the channel 186, how far the channel 186 extends around the leading edge 80 of the airfoil 152, the configuration and number of the cross-pins 162, etc. are all design specific for a particular turbine blade and a particular level of cooling.

The micro-circuit cooling channel 174 is positioned adjacent to the pressure side 86 of the trailing edge 82 and the micro-circuit cooling channel 176 is positioned adjacent to the suction side 84 of the trailing edge 82. As with the micro-circuit cooling channel 186, the channels 174 and 176 extend the length of the airfoil 152. Both of the micro-circuit cooling channels 174 and 176 include cylindrical cross-pins 198 and 200, respectively, that extend across the channels 174 and 176 to provide increased cooling. Further, as above, the micro-circuit cooling channels 174 and 176 are positioned very close to the outside edge of the airfoil 152, also in the range of 0.005-0.008".

Figure 8 is an illustration showing a part of the trailing edge 82 of the airfoil 152 and showing the pressure side wall and the suction side wall. The orifices 182 and 184 are shown extending through the trailing edge 82 where the orifices 182 are in fluid communication with the micro-circuit cooling channel 174 and the orifices 184 are in fluid communication with the micro-circuit cooling channel 176. As is apparent, the orifices 182 and 184 are staggered in that every other orifice is in with either the channel 174 or the channel 176. A thermal barrier coating 196 can provided an outside surface of the airfoil 152 to further increase the desired cooling. The micro-circuit cooling channels 186, 174 and 176 provide thin wall cooling and can be formed by a print part manufacturing process well known to those skilled in the art.

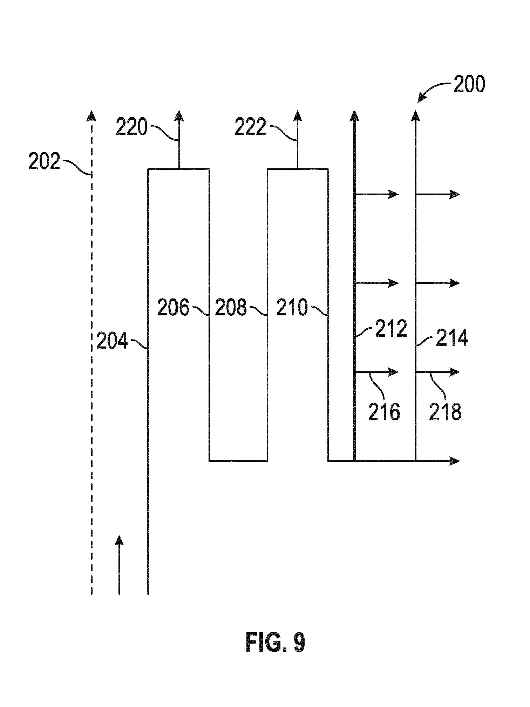

Figure 9 is a graphical representation of a cooling flow circuit 200 showing the airflow through the airfoil portion 152 of the blade 150. Particularly, dotted line 202 represents airflow through the micro-circuit cooling channel 186, line 204 represents airflow through the channel 166, line 206 represents airflow through the channel 168, line 208 represents airflow through the channel 170 and line 210 represents airflow through the channel 172. Line 212 represents airflow through the micro-circuit cooling channel 174 and line 214 represents flow through the micro-circuit cooling channel 176. Lines 216 represent airflow through the openings 182 in the trailing edge 82 and lines 218 represent airflow through the openings 184 in the trailing edge 82.

The foregoing discussion discloses and describes merely exemplary embodiments of the present invention. One skilled in the art will readily recognize from such discussion, and from the accompanying drawings and claims, that various changes, modifications and variations can be made therein without departing from the scope of the invention as defined in the following claims.

## Claims

1. A blade for a gas turbine engine, said blade comprising:
an airfoil including an outer housing wall defining an enclosure, a leading edge and a trailing edge;
a plurality of ribs extending at least a portion of the length of the airfoil within the enclosure and defining a serpentine flow channel that allows a cooling airflow to flow from a proximal end to a distal end of the airfoil; and
a leading edge micro-circuit cooling channel positioned at the leading edge of the airfoil and including a plurality of micro-pins extending across the micro-circuit cooling channel.

2. The blade according to claim 1 wherein the plurality of micro-pins are configured in an array so that micro-pins in one row of the array are staggered relative to micro-pins in an adjacent row in the array.

3. The blade according to claim 1 wherein the leading edge micro-circuit cooling channel is positioned within a wall of the enclosure to be within 0.005-0.008 inches of an outer surface of the airfoil.

4. The blade according to claim 1 further comprising a pressure side trailing edge micro-circuit cooling channel positioned at a pressure side and trailing edge of the airfoil and extending at least a portion of a length of the airfoil, said pressure side trailing edge micro-circuit cooling channel including a plurality of micro-pins extending across the channel.

5. The blade according to claim 4 wherein the plurality of micro-pins in the pressure side trailing edge micro-circuit cooling channel are configured in an array so that micro-pins in one row of the array are staggered relative to micro-pins in an adjacent row in the array.

6. The blade according to claim 4 wherein the pressure side trailing edge micro-circuit cooling channel is positioned within a wall of the enclosure to be within 0.005-0.008 inches of an outer surface of the airfoil.

7. The blade according to claim 4 wherein the pressure side trailing edge micro-circuit cooling channel is in fluid communication with a series of orifices in the trailing edge of the airfoil.

8. The blade according to claim 1 further comprising a suction side trailing edge micro-circuit cooling channel positioned at a suction side and trailing edge of the airfoil and extending at least a portion of a length of the airfoil, said suction side trailing edge micro-circuit cooling channel including a plurality of micro-pins extending across the channel.

9. The blade according to claim 8 wherein the plurality of micro-pins in suction side trailing edge micro-circuit cooling channel are configured in an array so that micro-pins in one row of the array are staggered relative to micro-pins in an adjacent row in the array.

10. The blade according to claim 8 wherein the suction side trailing edge micro-circuit cooling channel is positioned within a wall of the enclosure to be within 0.005-0.008 inches of an outer surface of the airfoil.

11. The blade according to claim 8 wherein the suction side trailing edge micro-circuit cooling channel is in fluid communication with a series of orifices in the trailing edge of the airfoil.

12. The blade according to claim 1 further comprising a thermal barrier provided on the outer wall of the enclosure.

13. The blade according to claim 1 wherein the blade is for a row one stage in the gas turbine engine.

14. The blade according to claim 1 wherein the leading edge micro-circuit cooling channel is formed by a print parts manufacturing process.

15. A blade for a gas turbine engine, said blade comprising:
an airfoil including an outer housing wall defining an enclosure, a leading edge and a trailing edge;
a plurality of ribs extending at least a portion of the length of the airfoil within the enclosure and defining a serpentine flow channel that allows a cooling airflow to flow from a proximal end to a distal end of the airfoil;
a leading edge micro-circuit cooling channel positioned at the leading edge of the airfoil and including a plurality of micro-pins extending across the micro-circuit cooling channel, wherein a forward leg of the serpentine flow channel and the leading edge micro-circuit cooling channel provide lead edge cooling for the airfoil;
a pressure side trailing edge micro-circuit cooling channel positioned at a pressure side and trailing edge of the airfoil and extending at least a portion of a length of the airfoil, said pressure side trailing edge micro-circuit cooling channel including a plurality of micro-pins extending across the channel; and
a suction side trailing edge micro-circuit cooling channel positioned at a suction side and trailing edge of the airfoil and extending at least a portion of a length of the airfoil, said suction side trailing edge micro-circuit cooling channel including a plurality of micro-pins extending across the channel, wherein a rearward leg of the serpentine flow channel splits into the pressure side trailing edge micro-circuit cooling channel and the suction side trailing edge micro-circuit cooling channel.

16. The blade according to claim 15 wherein the leading edge micro-circuit cooling channel, the pressure side trailing edge micro-circuit cooling channel and the suction side trailing edge micro-circuit cooling channel are all positioned within a wall of the enclosure to be within 0.005-0.008 inches of an outer surface of the airfoil.

17. The blade according to claim 15 wherein the plurality of micro-pins in the leading edge micro-circuit cooling channel, the pressure side trailing edge micro-circuit cooling channel and the suction side trailing edge micro-circuit cooling channel are configured in an array so that micro-pins in one row of the array are staggered relative to micro-pins in an adjacent row in the array.

18. The blade according to claim 15 wherein the pressure side trailing edge micro-circuit cooling channel and the suction side trailing edge micro-circuit cooling channel are in fluid communication with a series of orifices in the trailing edge of the airfoil in a staggered manner.

19. A gas turbine engine comprising:
an outer housing;
a compressor section being operable to produce a compressed airflow;
a combustion section in fluid communication with the compressor section that receives a combustion portion of the compressed airflow, said combustion section mixing the combustion portion of the compressed airflow with a fuel and combusting the mixture to produce a hot working gas; and
a turbine section in fluid communication with the combustion section, said turbine section receiving the hot working gas, said turbine section including a plurality of rows of vanes and a plurality of rows of blades, wherein at least some of the blades include an outer housing wall defining an enclosure, a plurality of ribs extending at least a portion of a length of the blade within the enclosure and defining at least one flow channel that allows a cooling airflow to flow from a proximal end to a distal end of the enclosure, a leading edge micro-circuit cooling channel positioned at the leading edge of the airfoil and including a plurality of micro-pins extending across the leading edge micro-circuit cooling channel, and a trailing edge micro-circuit cooling channel positioned at a trailing edge of the airfoil and including a plurality of micro-pins extending across the trailing edge micro-circuit cooling channel.

20. The gas turbine engine according to claim 18 wherein the leading edge micro-circuit cooling channel and the trailing edge micro-circuit cooling channel are positioned within a wall of the enclosure to be within 0.005-0.008 inches of an outer surface of the airfoil.
